# EUROPEAN PATENT SPECIFICATION

(11) **EP 0 368 573 B1**
(45) Date of publication and mention of the grant of the patent: **25.01.1995**
(21) Application number: 89311412.4
(22) Date of filing: 03.11.1989
(51) Int. Cl.: B22D 17/04, B22D 21/02, B22D 17/30, B22D 17/20

(54) **Method and apparatus for casting metal alloys with low melting temperatures**
Giessverfahren und Vorrichtung für niedrig schmelzende Metallegierungen
Méthode et appareillage pour couler des alliages métalliques à bas point de fusion

(30) Priority: 08.11.1988 US 268492
(43) Date of publication of application: 16.05.1990
(73) Proprietor: ELECTROVERT LTD., La Prairie, Quebec J5R 2E4 (CA)
(72) Inventor: Kidd, Thomas F., Candiac Quebec, J5R 5C7 (CA)
(74) Representative: Warren, Keith Stanley

(56) References cited:
- EP-A- 0 177 257
- CA-A- 1 099 476
- CH-A- 280 569
- DE-C- 1 194 104
- FR-A- 1 447 606
- GB-A- 2 009 645
- US-A- 3 300 822
- US-A- 3 364 981
- US-A- 3 495 652

## Description

The present invention relates to a metal casting process to produce melt-out metal cores for subsequent molding in components made of plastics material. More specifically, the present invention relates to a method and apparatus for casting metal alloys with low melting temperatures to achieve a product with uniform density and a fine grained structure.

Melt-out metal parts of complex shapes are made for use as cores in subsequently molded plastics components. Such cores are made of a low melting temperature alloy and are removed from the plastics components by melting the core and leaving the component. In another embodiment, metal alloys with low melting temperatures are used for encapsulating components such as turbine blades so they may be held for machining and other finishing steps. After use, the metal from the cores or encapsulations is re-melted and re-used.

One example of an apparatus for casting metal alloys with low melting temperatures is disclosed in US-A-4,676,296 (Ep-A-0177257, upon which the preambles of claims 1 and 7 are based.). In the apparatus depicted in this patent, a cylinder is provided in a tank of liquid metal alloy with a passage from the bottom of the cylinder passing out through the tank and into a mold or die. A valve is provided in the passage to shut off the flow of molten metal alloy in between injection cycles. A piston moves up and down within the cylinder and the cylinder is filled by raising the piston up above a filler aperture in the top of the cylinder to allow liquid metal alloy to flow into the cylinder. Before commencing the injection step, the piston is moved downwards a predetermined amount so that the liquid metal alloy within the cylinder is prepressurized. After the prepressurization step, the valve in the passage to the die is opened to permit liquid metal alloy to be injected into the die.

The forming of melt-out metal parts is a different operation to die casting wherein metals having higher melting temperatures, generally above 350°C are injected into a die at high pressures. In die casting, shot pressures are generally in the range of 5516 to 27580 kPa (800 to 4000 lbs/in²) and the time for injection is in the order of 30 to 40 milliseconds. In such an operation where hot metals are injected at a high velocity and turbulent flow into a die through a narrow gate, air can become entrapped and pressures build up in the cylinder and passage to the die. These high speed injection processes generally include runners leading into the die, and the unsolidified metal drains back after the casting process.

An example of a die casting machine is described in CA-A-1099476. In this machine, a gooseneck assembly is mounted in a metal melting pot and includes a pump for filling a pump chamber in the gooseneck and for making a shot into casting dies through an outlet passageway from the base of the pump chamber. A gate valve in the passageway adjacent the base of the pump chamber is selectively operable to direct molten metal from the pot into the chamber and from the chamber to the outlet passageway in response to operation of the pump.

Melt-out metal parts must be made out of metals that melt below the temperatures of the plastic. Such metals do not lend themselves to high pressure die casting. They are cast at pressures generally in the range of 207 to 345 kPa (30 to 50 lbs/in²). At higher pressures and faster injection speeds, porous castings can be formed with these metals. In the casting of melt-out metal parts, the metal is not placed under high pressure but allowed to flow into the die, and the filling time can vary from about 3 to 30 seconds depending on the size of the metal part. When the die is full of metal, a build up of pressure occurs, generally in the order of 207 to 276 kPa (30 to 40 lbs/in²) and is maintained for about 1 to 10 seconds, again depending on the size of the metal part. Drain back of molten metal does not need to occur, because the dies are direct cavity injection and do not have runners.

It has been found that in addition to the process of the present invention being repeatable, the castings, being cores or other components made of metal alloys with low melting points, have an improved surface finish and a uniform dense fine grained structure over that produced by die casting methods.

The present invention consists in a method of producing a casting or encapsulation from a molten metal alloy having a melting point below about 350° wherein the molten metal alloy from a molten metal alloy tank is injected into a die by actuation of an injection piston in an injection cylinder disposed within the tank and having an injection passageway passing through the tank to the die, the passageway being closed when the piston is raised so as to fill the cylinder and being opened when the piston is lowered to permit injection of molten metal alloy into the die, characterised by the steps of filling the injection cylinder with molten metal alloy from the tank through a valve port connected to the injection passageway and located at an elevation lower than the cylinder in response to raising of the piston in the cylinder; closing said valve port and opening the passageway from the cylinder to the die; lowering the piston in the cylinder after the passageway is open so that no prepressurization occurs in the cylinder or passageway prior to injection, the piston being lowered at a controlled rate so that substantially no pressure occurs in the die during injection, and
applying pressure to the piston after the injection step to pressurize the molten metal alloy in the die during solidification of the casting.

The invention also consists in an apparatus for producing a casting or encapsulation from a molten metal alloy having a melting point below about 350°C, comprising a tank for containing the molten metal alloy, a piston and cylinder located in the tank and having actuating means for raising and lowering the piston within the cylinder, an injection passageway connected to the base of the cylinder and leading from the tank for connection to a die located outside the tank, a valve in the passageway for controlling flow of molten metal alloy to the die, and valve operating means for controlling the valve, characterised in that the valve is located in the tank and has a first position where the injection passageway to the die is open and a second position where the passageway is closed and the cylinder is connected to the tank via a valve port located in the passageway at an elevation lower than the cylinder, and in that the actuating means is operable to raise the piston in the cylinder with the valve in the second piston so as to fill the cylinder with molten metal alloy and to lower the piston in the cylinder with the valve in the first position to ensure no prepressurization of the molten metal occurs in the cylinder or the passageway upon injection of molten metal alloy into the die.

With the invention, molten metal alloy is drawn into the cylinder through the port when the valve is in the closed position and the piston is raised. It also enables the piston within the cylinder to be reciprocated several times with the valve closed, thus permitting a change and recirculation of the liquid metal alloy within the cylinder with the liquid metal alloy in the tank.

With the additional port of the valve within the metal alloy tank, the invention avoids the necessity of prepressurizing metal alloy in the cylinder prior to injection into the die or mold. It also permits the injection step to be carried out without having to have a stop limit switch or other control and permits use of a closed die rather than an open die, so that the die provides the volume control and no predetermined volume control is required. Furthermore, by maintaining pressure on the liquid metal alloy in the die during cooling, a casting with uniform and density and a fine grain structure is achieved.

A further improvement achieved with the present invention is that no extra pressure is required on the return stroke when the piston is being raised, as in the case when no port within the tank is provided, because on the return stroke, liquid metal alloy is pulled through the port to enter the cylinder.

In the accompanying drawings which illustrate embodiments of the invention:
Figure 1 is a schematic diagram depicting one embodiment of the apparatus for producing a casting from a molten metal alloy;
Figure 2 is an isometric view, partially in section, of a molten metal alloy tank with a cylinder and valve within the tank;
Figure 3 is an isometric view of a cylinder and valve for placing within a molten metal alloy tank;
Figure 4 is a top cross sectional detailed view showing the rotary plug of the valve in the closed position;
Figure 5 is a top detailed sectional view of the valve shown in Figure 4 in the open position.

Low melting temperature metal alloys having a melting temperature in the range of about 35°C to 350°C are used for making castings for cores or encapsulation. Examples of these metal alloys are tin, antimony and lead alloys, and eutectic alloys of bismuth and tin.

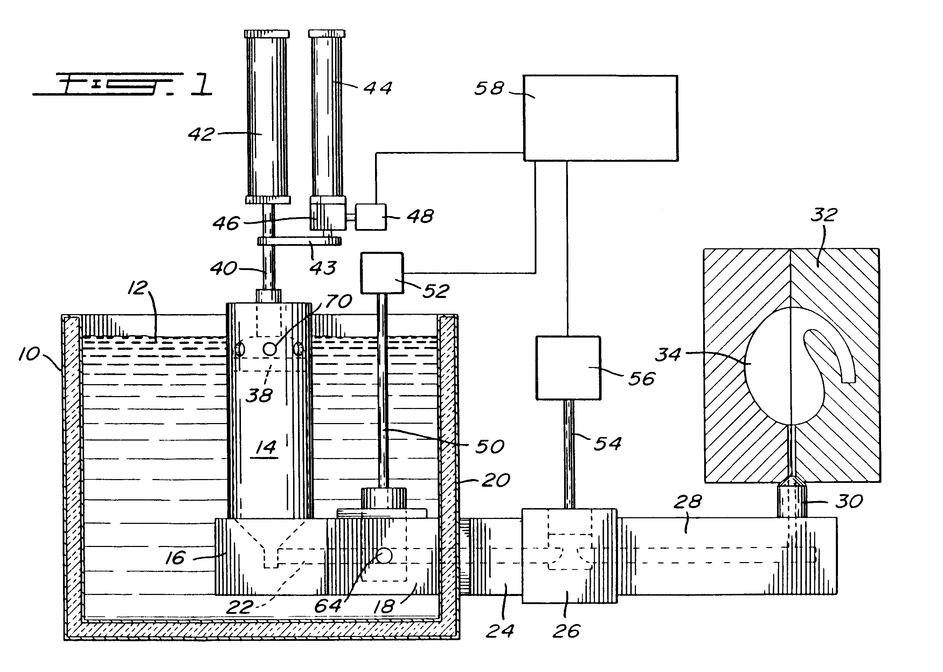

Figure 1 illustrates a tank 10 filled with molten metal alloy 12 and having an injection cylinder 14 vertically positioned therein, mounted on an injection block 16. The injection block 16 is joined to a safety valve body 18 which in turn is attached to the wall 20 of the tank 10. A connecting passageway 22 extends from the injection cylinder block 16 where it is joined to the cylinder 14 through the safety valve body 18 and the wall 20 of the tank 10 into a standoff block 24 which is attached to a rotary single lock valve body 26 in turn attached to a manifold 28. A nozzle 30 on the manifold 28 extends vertically upwards and joins a die 32 which is a closed die and may be removable from the nozzle 30 for separation and removal of the casting 34 within the die 32.

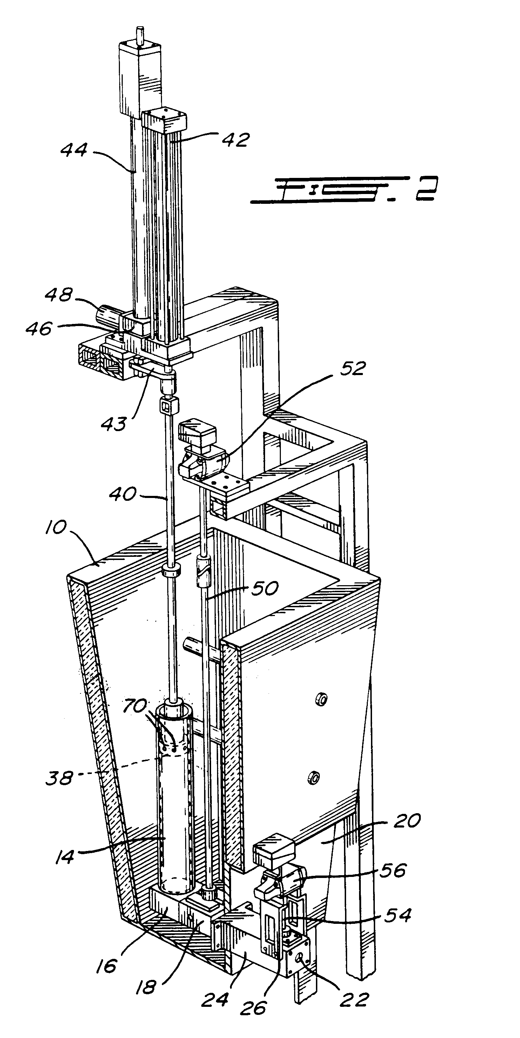

As shown in Figure 2, the injection cylinder 14 has an injection piston 38 on a shaft 40 which moves up and down within the cylinder 14. The piston 38 is powered by a pneumatic cylinder 42 which is double acting and has adjacent to it and joined by a bridge piece 43, a hydraulic cylinder 44 with a hydraulic valve 46 which has a stepper motor 48 to open and close the hydraulic valve 46 and thus affect speed control of the injecting piston 38. The air cylinder 42 is double acting and thus powers the piston 38 both upwards and downwards. The speed control is set by the stepper motor 48. The operation of the safety valve 18 is by a rotary shaft 50 extending up above the level of the molten metal alloy 12 in the tank 10 to a rotary actuator 52. Similarly, the rotary single lock valve 26 is activated by a shaft 54 connected to a rotary actuator 56. A micro-processor 58 as illustrated in Figure 1 operates the pneumatic cylinder 42, controls the speed of the piston 38 in the cylinder 14 by the stepper motor 48 and drives the rotary actuators 52 and 56 to control the sequential steps of the casting process. Whereas one arrangement to control the movement of the piston is disclosed herein, other systems including a controlled hydraulic cylinder and mechanical means with electronic control may be used.

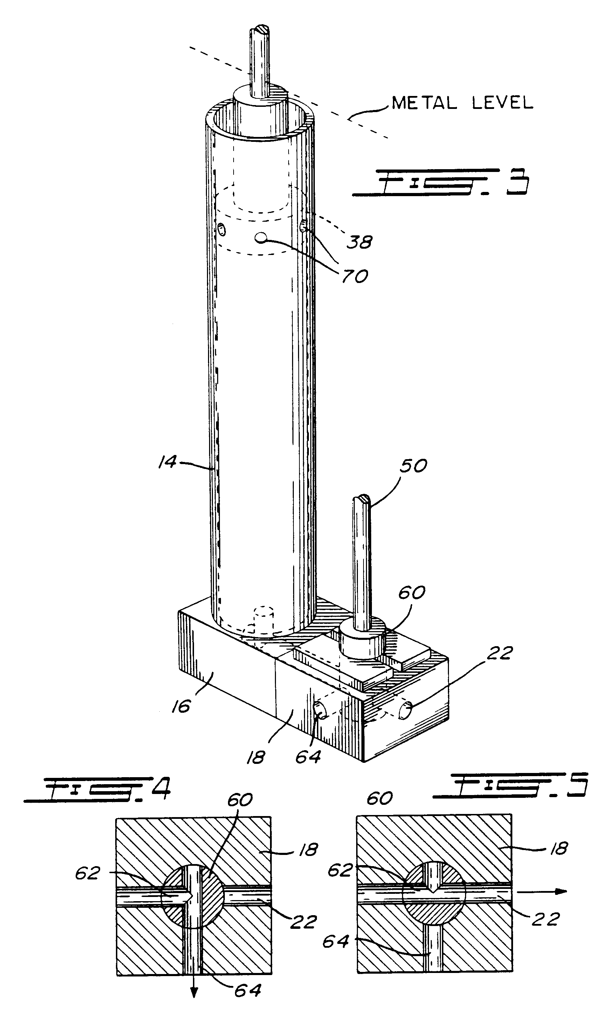

Figure 3 illustrates the safety valve 18 and injection cylinder block 16. A plug 60 in the valve block 18 is rotated by the actuator shaft 50 to provide a three port, two position valve. As shown in Figures 4 and 5, the plug 60 has a T-shaped port 62 which when in the closed position connects to a valve body port 64 which is within the tank 10. Thus in the closed position, as shown in Figure 4, the cylinder 14, by means of the connecting passage 22, is connected to the valve body port 64 and, when the piston 38 is raised in the cylinder 14, liquid metal alloy is pulled into the cylinder through the port 64 and the passageway 22. When the piston has reached its maximum height, which may be set by a limit switch (not shown), then the safety valve opens to the configuration shown in Figure 5 and the passageway 22 is open from the cylinder 14 to the die 32. Thus as the piston 38 moves downwards, molten metal alloy flows through the passageway 22. Because the die 32 is a closed rather than an open die, when it fills up, there is no space for the molten metal alloy to go, and, therefore, it is maintained under pressure within the system by the piston 38 which is pushed down by the pneumatic cylinder 42. By maintaining the pressure on the piston 38 and thus within the die 32, the metal is allowed to cool and solidify under pressure ensuring that no voids remain in the casting 34.

In one embodiment the filling time for the die 32 is in the range of about 3 to 30 seconds, depending upon the size of the metal part. When the die 32 is full, pressure builds up to about 207 to 345 kPa (30 to 50 lbs/in²) and the pressure is maintained for about 1 to 10 seconds.

Top ports 70 are provided at the top of the cylinder 14, thus if it is desired to drain the molten metal alloy from the tank 10, it is merely necessary to raise the piston 38 above the top ports 70, and open the valve body port 64 in the safety valve block 18. A drain valve (not shown) is provided at the bottom of the tank, and when opened, the liquid level goes down in both the tank and the cylinder at the same time. Furthermore, the liquid metal alloy within the cylinder may be changed from time to time by merely reciprocating the piston 38 in the cylinder 14 with the valve port 64 open so that the liquid metal alloy flows in and out as the piston 38 reciprocates.

There is substantially no pressure in the injection cylinder prior to the injection cycle and when the safety valve 18 opens and the rotary single lock valve 26 opens, the liquid metal alloy flows into the mold controlled by the speed of the piston 38 which in turn is controlled by the stepper motor 48 of the valve 46 of the hydraulic cylinder 44. The mold or die 32 is closed but air vents prevent pressure build up within the mold during the injection step. When the mold is completely full, pressure builds up and the liquid metal is held under pressure during solidification as the piston 38 is pushed downwards in the cylinder 14. The lock valve 26 closes and the safety valve 18 closes. The injection piston 38 is then raised up in the cylinder 14 allowing re-filling of the injection cylinder 14 with molten metal alloy through the port 64 in the safety valve block 18. The re-filling of the cylinder 14 occurs partly by gravity from the weight of liquid metal alloy in the tank 10 and partly by a vacuum occurring by raising the piston 38 in the cylinder 14.

The safety valve 18 shown herein incorporates a rotating plug 60 within a cylindrical aperture of the safety valve body 18. The rotating plug 60 provides less leakage and less wear than a reciprocating spool type valve, and performs well at low pressures. The lock valve 26 in one embodiment is of the type including a rotating member having a flat surface that rotates on a polished flat surface of a stationary disc. The safety valve 18 may be a similar type of valve as the lock valve 26 with an additional port provided so that when the valve is in the closed position, a port in the side wall connects the passageway 22 leading to the cylinder 14 to the liquid metal alloy in the tank 10.

Liquid metal flow rates delivering metal alloy to a die vary from about 0.1 to 1 Kg/sec. The tank 10 maintains the liquid metal alloy therein at the desired temperature, and heaters may be provided in the passageway and lock valve outside the tank as well as in the die to ensure the metal alloys are kept above the melting temperature and flow easily into the dies.

Various changes may be made to the embodiments described herein without departing from the scope of the present invention as defined by the following claims. For example, whereas one cylinder 14 is shown within the tank, several cylinders each having their own passageway to separate dies may be used.

## Claims

1. A method of producing a casting (34) or encapsulation from a molten metal alloy (12) having a melting point below about 350°, wherein molten metal alloy from a molten metal alloy tank (10) is injected into a die (32) by actuation of an injection piston (38) in an injection cylinder (14) disposed within the tank and having an injection passageway (22) passing through the tank to the die, the passageway (22) being closed when the piston is raised so as to fill the cylinder and being opened when the piston is lowered to permit injection of molten metal alloy into the die, characterised by the steps of
filling the injection cylinder (14) with molten metal alloy (12) from the tank (10) through a valve port (64) connected to the injection passageway (22) and located at an elevation lower than the cylinder by raising the piston (38) in the cylinder;
closing said valve port (64) and opening the passageway (22) from the cylinder (14) to the die (32);
lowering the piston (38) in the cylinder (14) after the passageway (22) is open so that no prepressurization occurs in the cylinder or passageway prior to injection, the piston being lowered at a controlled rate so that substantially no pressure occurs in the die during injection, and
applying pressure to the piston (38) after the injection step to pressurize the molten metal alloy in the die (32) during solidification of the casting.

2. The method of claim 1, wherein the cylinder (14) is filled within a time of about 3 to 30 seconds.

3. The method of claim 1 or 2, wherein the pressure applied to the piston (38) is in the range of about 207 to 276 kPa.

4. The method of claim 1, 2 or 3, wherein the pressure is applied to the piston (38) for about 1 to 10 seconds.

5. The method of any of claims 1 to 4, wherein the cylinder (14) is placed within the molten metal tank (10), and filling of the cylinder is assisted by gravity when the valve port (64) is opened and the piston (38) is raised.

6. The method of any of claims 1 to 5, wherein a rotary lock valve (26) is located in the passageway (22) outside the molten metal alloy tank (10) adjacent the die (32), and wherein the rotary lock valve (26) is closed during the filling step.

7. An apparatus for producing a casting (34) or encapsulation from a molten metal alloy (12) having a melting point below about 350°C, comprising a tank (10) for containing the molten metal alloy (12), a piston (38) and cylinder (14) located in the tank (10) and having actuating means (42) for raising and lowering the piston within the cylinder, an injection passageway (22) connected to the base of the cylinder and leading from the tank for connection to a die (32) located outside the tank, a valve (18) in the passageway for controlling flow of molten metal alloy to the die, and valve operating means (52) for controlling the valve, characterised in that the valve (18) is located in the tank (10) and has a first position where the injection passageway (22) to the die (32) is open and a second position where the passageway is closed and the cylinder (14) is connected to the tank via a valve port (64) located in the passageway at an elevation lower than the cylinder, and in that the actuating means (42) is operable to raise the piston in the cylinder with the valve in the second piston so as to fill the cylinder with molten metal alloy and to lower the piston (38) in the cylinder with the valve in the first position to ensure no prepressurization of the molten metal occurs in the cylinder or the passageway upon injection of molten metal alloy into the die.

8. The apparatus of claim 7, including control means (44,46,48) for the actuating means (42) whereby to control the flow speed and quantity of molten metal alloy injected into the die (32) so that the die fills within a time of about 3 to 30 seconds.

9. The apparatus of claim 7 or 8, wherein the valve is a rotary valve with a rotary valve plug (60) rotating in a valve body (18) such that, when the valve is in the first position, a substantially straight channel extends through the valve plug providing an open passageway between the cylinder (14) and the die (32) and, when the valve is in the second position, a connection between the valve port (64) in the valve body and the cylinder is opened.

10. The apparatus of claim 9, wherein the valve is a three port, two position valve and the valve plug (60) has a T-shaped port (62) therein arranged to cooperate with the ports in the valve body (18).

11. The apparatus of claim 8, 9 or 10, including a vent port (70) at the top of the injection cylinder (14) to vent the cylinder when the piston (38) is in the fully raised position.

12. The apparatus of any of claims 8 to 11, wherein the valve port (64) is positioned to drain the cylinder (14) and the injection passageway (22) when the metal alloy is drained from the tank (10).

## Patentansprüche

1. Verfahren zum Herstellen eines Gußteiles (34) oder eines Stuckes aus einer geschmolzenen Metallegierung (12), die einen Schmelzpunkt unterhalb etwa 350°C aufweist, wobei die geschmolzene Metallegierung aus einem Behälter (10) in eine Form (32) durch Betätigen eines Injektionskolbens (38) in einem Injektionszylinder (14) injiziert wird, der innerhalb des Behälters angeordnet ist und einen Injektionsdurchgang (22) aufweist, der sich durch den Behälter zu der Form erstreckt, wobei der Durchgang (22) geschlossen ist, wenn der Kolben angehoben ist, um somit den Zylinder zu füllen und geöffnet ist, wenn der Kolben abgesenkt wird, um das Injizieren der geschmolzenen Metallegierung in die Form zu gestatten,
**dadurch gekennzeichnet,**
daß der Injektionszylinder (14) mit geschmolzener Metallegierung (12) aus dem Behälter (10) durch eine Ventilöffnung (64) gefüllt wird, welche mit dem Injektionsdurchgang (22) verbunden und in einer Höhe angeordnet ist, die niedriger als der Zylinder ist, indem der Kolben (38) in dem Zylinder angehoben wird,
daß die Ventilöffnung (64) geschlossen und der Durchgang (22) von dem Zylinder (14) zu der Form (32) geöffnet werden,
daß der Kolben (38) in dem Zylinder (14), nachdem der Durchgang (22) offen ist, abgesenkt wird, so daß keine Vordruckbeaufschlagung in dem Zylinder oder Durchgang vor der Injektion eintritt, wobei der Kolben mit einer gesteuerten Geschwindigkeit abgesenkt wird, so daß im wesentlichen während der Injektion in der Form kein Druck vorherrscht, und
daß nach dem Injektionsvorgang Druck auf den Kolben (38) ausgeübt wird, um die geschmolzene Metallegierung in der Form (32) während des Verfestigens des Gußstückes unter Druck zu setzen.

2. Verfahren nach Anspruch 1, dadurch gekennzeichnet, daß der Zylinder (14) innerhalb einer Zeit von ungefähr 3 bis 30 Sekunden gefüllt wird.

3. Verfahren nach Anspruch 1 oder 2, dadurch gekennzeichnet, daß der auf den Kolben (38) ausgeübte Druck in dem Bereich von ungefähr 207 bis 276 kPa liegt.

4. Verfahren nach Anspruch 1, 2 oder 3, dadurch gekennzeichnet, daß der Druck auf den Kolben (38) während ungefähr 1 bis 10 Sekunden ausgeübt wird.

5. Verfahren nach einem der Ansprüche 1 bis 4, dadurch gekennzeichnet, daß der Zylinder (14) innerhalb des Behälters (10) für das geschmolzene Metall angeordnet wird und das Füllen des Zylinders durch Schwerkraft unterstützt wird, wenn die Ventilöffnung (64) geöffnet ist und der Kolben (38) angehoben ist.

6. Verfahren nach einem der Ansprüche 1 bis 5, dadurch gekennzeichnet, daß ein Drehsperrventil (26) in dem Durchgang (22) außerhalb des Behälters (10) für die geschmolzene Metallegierung neben der Form (32) angeordnet wird, und daß das Drehsperrventil (26) während des Füllvorganges geschlossen wird.

7. Vorrichtung zum Herstellen eines Gußstückes (34) oder eines Teiles aus einer geschmolzenen Metallegierung (12), die einen Schmelzpunkt unterhalb etwa 350°C aufweist, mit einem Behälter (10) zum Aufnehmen der geschmolzenen Metallegierung (12), einem Kolben (38) und einem Zylinder (14) in dem Behälter (10) mit einer Betätigungseinrichtung (42) zum Anheben und Absenken des Kolbens innerhalb des Zylinders, einem Injektionsdurchgang (22), der mit dem Boden des Zylinders verbunden ist und von dem Tank zwecks Verbindung mit einer Form (32) führt, die außerhalb des Behälters vorgesehen ist, einem Ventil (18) in dem Durchgang zum Steuern der Strömung der geschmolzenen Metallegierung zu der Form und mit einer Ventilbetätigungseinrichtung (52) zum Steuern des Ventils,
**dadurch gekennzeichnet,**
daß das Ventil (18) in dem Behälter (10) angeordnet ist und eine erste Position aufweist, in welcher der Injektionsdurchgang (22) zu der Form (32) offen ist und eine zweite Position aufweist, in welcher der Durchgang geschlossen ist und der Zylinder (14) mit dem Behälter über eine Ventilöffnung (64) verbunden ist, die in dem Durchgang in einer Höhe unterhalb derjenigen des Zylinders angeordnet ist, und daß die Betätigungseinrichtung (42) im Betrieb den Kolben in dem Zylinder anhebt, wenn sich das Ventil in der zweiten Position befindet, um somit den Zylinder mit geschmolzener Metallegierung zu füllen und den Kolben (38) in dem Zylinder abzusenken, wenn sich das Ventil in der ersten Position befindet, um zu gewährleisten, daß keine Vorunterdrucksetzung des geschmolzenen Metalles in dem Zylinder oder in dem Durchgang bei Einspritzen der geschmolzenen Metallegierung in die Form auftritt.

8. Vorrichtung nach Anspruch 7, gekennzeichnet durch eine Steuereinrichtung (44, 46, 48) für die Betätigungseinrichtung (42), um die Strömungsgeschwindigkeit und Menge der in die Form (32) eingespritzten geschmolzenen Metällegierung zu steuern, so daß sich die Form innerhalb einer Zeit von ungefähr 3 bis 30 Sekunden füllt.

9. Vorrichtung nach Anspruch 7 oder 8, dadurch gekennzeichnet, daß das Ventil ein Drehventil mit einem Drehventilstopfen (60) ist, der sich in einem Ventilkörper (18) so dreht, daß wenn sich das Ventil in der ersten Position befindet, ein im wesentlichen gerader Kanal sich durch den Ventilstopfen erstreckt und zwischen dem Zylinder (14) und der Form (32) einen offenen Durchgang schafft, und wenn sich das Ventil in der zweiten Position befindet, eine Verbindung zwischen der Ventilöffnung (64) in dem Ventilkörper und dem Zylinder herstellt.

10. Vorrichtung nach Anspruch 9, dadurch gekennzeichnet, daß das Ventil ein Zweiwegeventil mit drei Durchgängen ist und daß der Ventilstopfen (60) eine T-förmige Öffnung (62) aufweist, welche mit den Öffnungen in dem Ventilkörper (18) zusammenwirkt.

11. Vorrichtung nach Anspruch 8, 9 oder 10, dadurch gekennzeichnet, daß ein Lüftungsdurchgang (70) im oberen Bereich des Injektionszylinders (14) vorgesehen ist, um den Zylinder zu lüften, wenn sich der Kolben (38) in seiner vollständig angehobenen Position befindet.

12. Vorrichtung nach einem der Ansprüche 8 bis 11, dadurch gekennzeichnet, daß die Ventilöffnung (64) so positioniert ist, daß der Zylinder (14) und der Injektionsdurchgang (22) gespült werden, wenn die Metallegierung aus dem Behälter (10) abgezogen ist.

## Revendications

1. Procédé de production d'une pièce coulée (34) ou d'un enrobage au départ d'un alliage métallique en fusion (12), à point de fusion inférieur à 350°C, dans lequel l'alliage métallique en fusion provenant d'une cuve (10) est injecté dans une matrice (32) par actionnement d'un piston d'injection (38) dans un cylindre d'injection (14) disposé dans la cuve et possédant un passage d'injection (22) traversant la cuve pour aboutir dans la matrice, le passage (22) étant fermé lorsque le piston est remonté de manière à remplir le cylindre et étant ouvert lorsque le piston est descendu de manière à permettre l'injection de l'alliage métallique en fusion dans la matrice, caractérisé par les étapes consistant à :
remplir le cylindre d'injection (14) au moyen d'alliage métallique en fusion (12) depuis la cuve (10) via une lumière de valve (64) communiquant avec le passage d'injection (22) et située à une hauteur inférieure à celle du cylindre, en faisant remonter le piston (38) dans le cylindre;
fermer ladite lumière de valve (64) et ouvrir le passage (22) allant du cylindre (14) à la matrice (32);
faire descendre le piston (38) dans le cylindre (14) après que le passage d'écoulement (22) a été ouvert, de telle sorte qu'aucune prépressurisation ne se produise dans le cylindre ou le passage avant l'injection, le piston descendant à une vitesse réglée de manière à ne pas créer sensiblement de pression dans la matrice pendant l'injection, et
appliquer une pression au piston (38) après l'étape d'injection de manière à mettre l'alliage métallique en fusion sous pression dans la matrice (32) pendant la solidification de la pièce coulée.

2. Procédé selon la revendication 1, dans lequel le cylindre (14) est rempli en un laps de temps d'environ 3 à 30 secondes.

3. Procédé selon la revendication 1 ou 2, dans lequel la pression appliquée au piston (38) se situe dans la gamme d'environ 207 à 276 kPa.

4. Procédé selon les revendications 1, 2 ou 3, dans lequel la pression est appliquée au piston (38) pendant un laps de temps d'environ 1 à 10 secondes.

5. Procédé selon l'une quelconque des revendications 1 à 4, dans lequel le cylindre (14) est placé dans la cuve (10) de métal en fusion, et le remplissage du cylindre est assisté par la gravité lorsque la lumière de valve (64) est ouverte et que le piston (38) est remonté.

6. Procédé selon l'une quelconque des revendications 1 à 5, dans lequel une valve rotative d'arrêt (26) est installée dans le passage (22) à l'extérieur de la cuve (10) d'alliage métallique en fusion, à proximité de la matrice (32), et dans lequel la valve rotative d'arrêt (26) est fermée pendant l'étape de remplissage.

7. Appareil destiné à produire une pièce coulée (34) ou à réaliser un enrobage en un alliage métallique en fusion (12) présentant un point de fusion inférieur à environ 350°C, comprenant une cuve (10) contenant l'alliage métallique en fusion (12), un piston (38) et un cylindre (14) installés dans la cuve (10) et comportant des moyens d'actionnement (42) pour faire monter et descendre le piston dans le cylindre, un passage d'injection (22) raccordé à la base du cylindre et allant de la cuve jusqu'à une matrice (32) située à l'extérieur de la cuve, une valve (18) dans le passage pour commander l'écoulement d'alliage métallique en fusion vers la matrice, ainsi qu'un moyen d'actionnement de valve (52) pour commander la valve, caractérisé en ce que la valve (18) est installée dans la cuve (10) et présente une première position dans laquelle le passage d'injection (22) vers la matrice (32) est ouvert et une seconde position dans laquelle le passage est fermé, que le cylindre (14) est raccordé à la cuve via une lumière de valve (64) située dans le passage à une hauteur inférieure à celle du cylindre, et que le moyen d'actionnement (42) peut intervenir pour faire monter le piston dans le cylindre avec la valve en seconde position de manière à remplir le cylindre d'alliage métallique en fusion et pour faire descendre le piston (38) dans le cylindre avec la valve en première position afin de garantir qu'il ne se produise aucune prépressurisation du métal en fusion dans le cylindre ou le passage lors de l'injection de l'alliage métallique en fusion dans la matrice.

8. Appareil selon la revendication 7, comprenant des moyens de commande (44, 46, 48) pour le moyen d'actionnement (42) afin de régir la vitesse d'écoulement et la quantité d'alliage métallique en fusion injectée dans la matrice (32), de telle sorte que la matrice se remplisse en un laps de temps d'environ 3 à 30 secondes.

9. Appareil selon la revendication 7 ou 8, dans lequel la valve est une valve rotative comportant une noix rotative (60) tournant dans un corps de valve (18), de telle sorte que lorsque la valve se trouve dans la première position, un canal essentiellement rectiligne s'étende à travers la noix, fournissant un passage ouvert entre le cylindre (14) et la matrice (32) et, lorsque la valve se trouve dans la deuxième position, une communication entre la lumière de valve (64) dans le corps de valve et le cylindre soit ouverte.

10. Appareil selon la revendication 9, dans lequel la valve est une valve à trois lumières et deux positions et dans la noix de valve (60) est prévue une lumière en forme de T (62) destinée à coopérer avec les lumières du corps de valve (18).

11. Appareil selon les revendications 8, 9 ou 10, comportant une lumière de purge d'air (70) dans le haut du cylindre d'injection (14) destinée à purger l'air contenu dans le cylindre lorsque le piston (38) est en position complètement remontée.

12. Appareil selon l'une quelconque des revendications 8 à 11, caractérisé en ce que la lumière de valve (64) est positionnée de manière à vider le cylindre (14) et le passage d'injection (22) lorsque l'on procède à la vidange de l'alliage métallique de la cuve (10).
